# EUROPEAN PATENT SPECIFICATION

(11) **EP 2 687 724 B1**
(45) Date of publication and mention of the grant of the patent: **09.11.2016**
(21) Application number: 13176632.1
(22) Date of filing: 16.07.2013
(51) Int. Cl.: F04B 53/02, F04B 53/16, F04B 1/04

(54) **Piston pump**
Kolbenpumpe
Pompe à piston

(30) Priority: 17.07.2012 JP 2012158828
(43) Date of publication of application: 22.01.2014
(73) Proprietor: Nissin Kogyo Co., Ltd., Tomi-city, Nagano (JP)
(72) Inventor: Kodama, Takuro, Nagano (JP); Maruyama, Tsuyoshi, Nagano (JP); Mizusaki, Yoshinobu, Nagano (JP)
(74) Representative: Hoffmann Eitle

(56) References cited:
- DE-A1- 10 123 038
- DE-A1-102008 040 140
- DE-A1-102009 054 524
- GB-A- 2 366 337

## Description

### CROSS-REFERENCE TO RELATED APPLICATION(S)

This application claims priority from Japanese Patent Application No. 2012-158828 filed on July 17, 2012.

### FIELD

The invention relates to a piston pump.

### BACKGROUND

As a piston pump, there is known a pump which is used in a hydraulic control apparatus for a vehicle.

JP-2008-303750-A discloses a piston pump structured such that a piston (plunger) is reciprocated within a cylinder by a drive member such as an eccentric cam to thereby suck brake fluid into the cylinder from a suction hole and to discharge the brake fluid within the cylinder to a discharge hole.

In such piston pump, a seal member (an X ring) is interposed between the cylinder and piston, while this seal member separates (seals) a pump chamber and a cam chamber from each other.

However, in the above-mentioned piston pump, when the cylinder or piston has a scratch, a dent and the like, due to the stroke of the piston, the brake fluid may move over the seal member through such scratch/dent, that is, it may invade from the pump chamber into the cam chamber.

GB 2 366 337 A describes a piston pump for an electrohydraulic vehicle brake system. The document proposes to seal a pump piston at an eccentric-side end by means of a sealing ring, e.g. a Quad-Ring, which comprises two axially mutually spaced-apart sealing lips and radial passages, and to connect intermediate chambers between the axially spaced-apart sealing lips by a fluid line to a fluid reservoir, from which the piston pump takes in fluid, or to a pump inlet.

### SUMMARY

One object of the invention is to provide a piston pump which can prevent the brake fluid from invading into the cam chamber or the like.
The invention is defined in claim 1. In this structure, since the length of the seal section is larger than the stroke length of the piston, even when a scratch, a dent and the like is formed on the cylinder or piston near the seal member, such scratch/dent is prevented from moving to the cam chamber side beyond the seal section, thereby preventing the brake fluid from invading from the pump chamber side to the cam chamber side through the scratch/dent.

The invention may provide the piston pump (1),
wherein the seal member (50) includes two sliding contact surfaces (53) arranged in the sliding direction of the piston (40), and
wherein the seal section (L1) ranges from the one-end-side end of the sliding contact surface (53) to the other-end-side end of the sliding contact surface (53).

In this structure, even when the scratch/dent exists, since it is allowed to move beyond only one of the sliding contact surfaces, the invasion of the brake fluid into the cam chamber can be prevented effectively.

The invention may provide the piston pump (1),
wherein the two sliding contact surfaces (53) respectively include a surface-pressure-peak portion (52) having the highest surface pressure, and
wherein a length (L2) between the surface-pressure-peak portions is larger than the stroke length (S1).

In this structure, since the length between the surface-pressure-peak portions is larger than the stroke length of the piston, even when a scratch, a dent and the like exist on the pump chamber side, it is prevented from moving to the cam chamber side beyond the surface-pressure-peak portions, thereby preventing the brake fluid from invading from the pump chamber side into the cam chamber side through such scratch/dent.

The invention may provide the piston pump (1),
wherein a cylinder diameter direction thickness (D1) of the seal member (50) is smaller than the length (L2) between the surface-pressure-peak portions.

In this structure, while providing the seal section larger than the stroke length of the piston, the thickness of the seal member can be reduced, thereby reducing the size of the piston pump in the cylinder diameter direction.

The invention may provide the piston pump (1),
wherein the seal member (50A) has an oval-shaped section and a cylinder diameter direction thickness (D1) of the seal member (50A) is smaller than the length of the seal section (L3).

In this structure, based on the simple-structure seal member such as an oval-shaped-section O ring, while providing the seal section larger than the stroke length of the piston, the thickness of the seal member can be reduced, thereby reducing the size of the piston pump in the cylinder diameter direction.

The invention may provide the piston pump (1),
wherein the seal section (L3) ranges from one end to the other end of the sliding contact surface (53).

In this structure, based on the simple-structure seal member, the sliding contact surface can be sealed entirely from one end to the other end thereof, thereby effectively preventing the brake fluid from invading into the cam chamber.

The invention may provide the piston pump (1),
wherein the seal member (50) includes two sliding contact surfaces (53)
wherein the sliding contact surfaces (53) includes a lip portion (51 a) extending toward the pump chamber (30) side and a lip portion (51b) extending toward the cam chamber (130) side, respectively, and
wherein the seal section (L1) extends over the two lip portions (51a, 51b).

In this structure, even when a scratch, a dent and the like exists, since it is allowed to move beyond only one of the sliding contact surfaces, the invasion of the brake fluid into the cam chamber can be prevented effectively.

According to the piston pump of the invention, invasion of brake fluid into a cam chamber or the like can be prevented.

### BRIEF DESCRIPTION OF DRAWINGS

Fig. 1 is a side section view of a piston pump according to an embodiment.
Fig. 2A is an enlarged section view of a seal member, and Fig. 2B is an enlarged section view of relationship between a seal section and a stroke length of a piston.
Figs. 3A and 3B show the operations of the embodiment.
Figs.4A and 4B show the operations of a comparison example.
Figs. 5A and 5B show a seal member for use in a piston pump of another example. Fig. 5A is an enlarged section view of the seal member, and Fig. 5B is an enlarged section view of relationship between a seal section and a stroke length of a piston.

### DETAILED DESCRIPTION

The embodiment will be described with reference to the drawings.

The embodiment exemplifies a piston pump used in an oil pressure generator for a hydraulic control apparatus to be mounted on a vehicle such as a car.

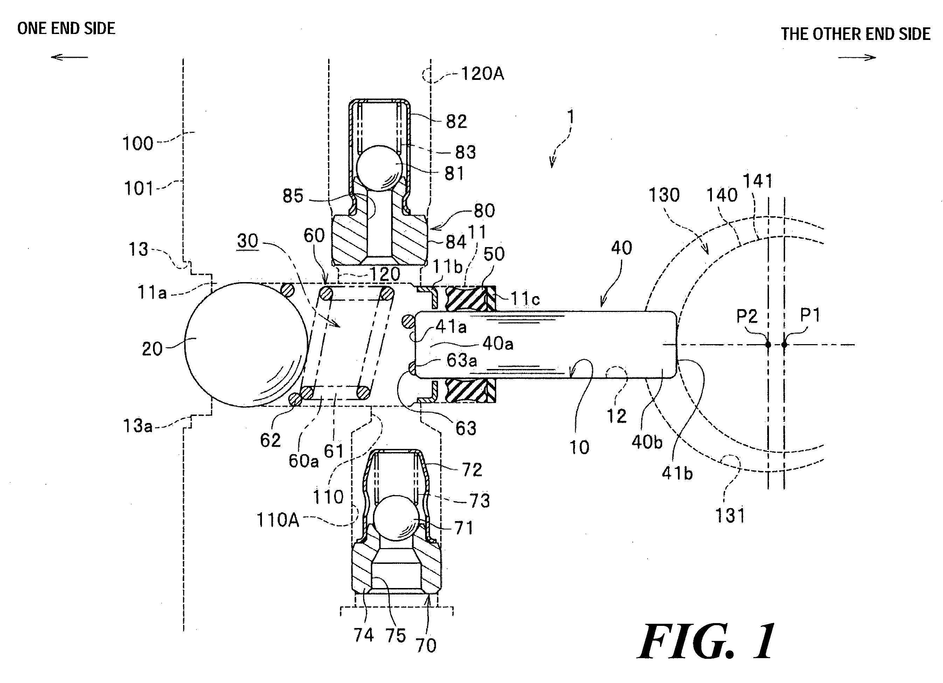

In the following description, "one end side" corresponds to the left side of the Fig. 1, while "the other end side" corresponds to the right side of the Fig. 1.

As shown in Fig. 1, a piston pump 1 includes a pump body 100 having a cylinder 10, a cover member 20 for sealing one end of the cylinder 10, a piston 40 defining a pump chamber 30 with the cover member 20 therebetween, a seal member 50 fitted with the outer surface of the piston 40, and a coil spring 60 for pressing the piston 40 toward an eccentric cam 140. The piston 40 is driven by the eccentric cam 140.

The piston 40 can be reciprocated by the eccentric cam 140 in the axial direction within the cylinder 10. When the piston 40 is driven to the other end side, the piston pump 1 sucks brake fluid from a suction port 110 into the pump chamber 30. When the piston 40 is driven to the one end side, the piston pump 1 discharges the brake fluid from within the pump chamber 30 to a discharge port 120.

The pump body 100 is a substantially box-shaped metal-made part to be mounted on a vehicle. Multiple oil passages (not shown) and the cylinder (cylinder hole) 10 are formed in the pump body 100. The cylinder 10 has a circular section such that the piston 40 can be inserted thereinto.

The one end of the cylinder 10 is opened at one surface 101 of the pump body 100, and the other end thereof communicates with a cam chamber 130 formed by a bearing hole 131. That is, the cylinder 10 extends from one surface 101 of the pump body 100 toward the central portion thereof in the horizontal direction in Fig. 1.

The cylinder 10 includes a stepped cylindrical enlarged diameter portion 11 and a cylindrical reduced diameter portion 12. The enlarged diameter portion 11 extends from a middle portion of the cylinder 10 in its axial direction toward the one end side, and the reduced diameter portion 12 extends from the middle portion toward the other end side.

The enlarged diameter portion 11 has a diameter larger than the reduced diameter portion 12 but corresponding to the outside diameter of the seal member 50, thereby accommodating the seal member 50.

An opening 13 having a diameter larger than the enlarged diameter portion 11 is further formed on the one end side of the cylinder 10. The opening 13 includes an annular bottom portion 13 a.

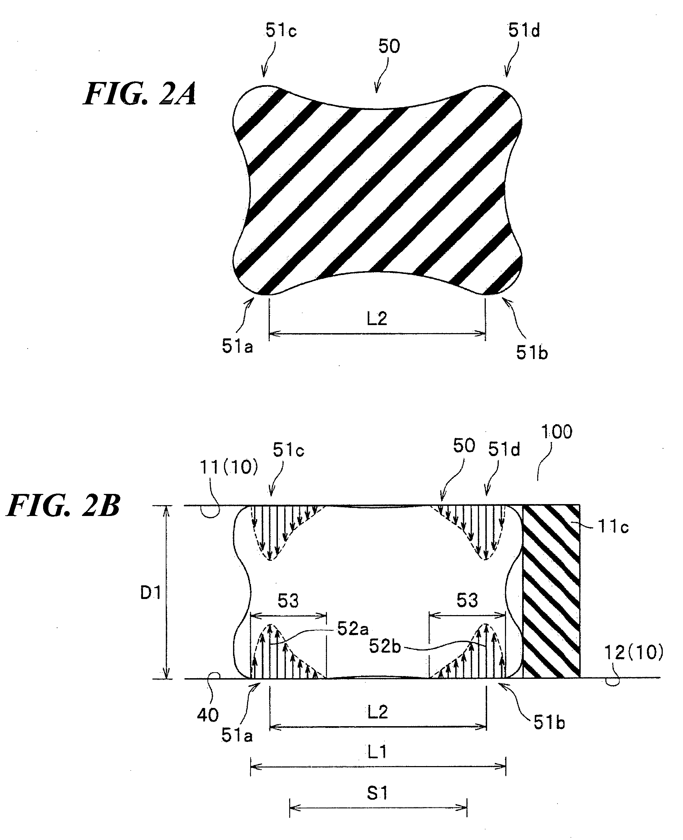

The seal member 50 is fitted with the outer surface of the substantially middle portion of the piston 40. The seal member 50 is held by the inner peripheral surface of the enlarged diameter portion 11 of the cylinder 10 and the outer peripheral surface of the piston 40, and thus seals fluid tight between the inner peripheral surface of the enlarged diameter portion 11 and the outer peripheral surface of the piston 40. The pump chamber 30 and the cam chamber 130 is fluid tight separated from each other by the seal member 50. The seal member 50 is formed of a resin-made ring-shaped member having small sliding resistance with respect to the outer peripheral surface of the piston 40, toughness and anti-wear property. As shown in Fig. 2A, the seam member 50 includes four lip portions 51a - 51d respectively projecting in four directions to thereby have a substantially X-shaped section.

The seal member 50 includes a sliding contact surface (inner peripheral surface) 53 closely contactable with the outer peripheral surface of the piston 40. A seal section L1 is defined between the piston 40 and the seal member 50 are so as to be sealed by the two sliding contact surfaces 53 and 53. The seal section L1 extends between the two lip portions 51a and 51b in the sliding direction of the piston 40. More specifically, the seal section L1 extends from the one-end-side end (left end) of the contacting portion between the lip portion 51 a and the piston 40 to the other-end-side end (right end) of the contacting portion between the lip portion 51b and the piston 40.

The size of surface pressure (the surface pressure of the sliding contact surfaces 53) provided when the respective lip portions 51a and 51b are contacted with the outer peripheral surface of the piston 40 has such distribution as illustrated by arrows in Fig. 2B. Assuming that portions (surface-pressure-peak portions) 52a and 52b have the highest surface pressure, the length L2 between the two surface-pressure-peak portions 52a and 52b is also longer than the stroke length S1 of the piston 40.

As shown in Fig. 2B, when the seal member 50 is fitted with the outer surface of the piston 40, the cylinder diameter direction thickness D1 thereof is smaller than the length L2 between the two surface-pressure-peak portions 52a and 52b.

As shown in Fig. 1, two annular stoppers 11b and 11c are respectively fitted with the inner surface of the bottom section of the enlarged diameter portion 11, and the seal member 50 is positioned therebetween.

The cover member 20 constituted of a metal-made spherical body is pressed into the one-end opening of the enlarged diameter portion 11, whereby the one end of the cylinder 10 is sealed by the cover member 20.

The outside diameter of the cover member 20 is set slightly larger than the inside diameter of the enlarged diameter portion 11 of the cylinder 10. The cylinder 10 includes a removal preventive portion 11 a at the position shifted from the center of the cover member 20 toward the one end side, thereby preventing the cover member 20 from being removed.

The removal preventive portion 11 a can be formed by plastically deforming the inner peripheral surface (hole wall portion) of the cylinder 10. To form the removal preventive portion 11 a, after the cover member 20 has been pressed into the enlarged diameter portion 11, the bottom portion 13 a is crushed using a jig to cause the bottom portion 13a of the opening 13 to project inside the enlarged diameter portion 11, thereby staking the inner peripheral surface of the enlarged diameter portion 11 with the cover member 20.

The eccentric cam 140 is accommodated within the cam chamber 130. The eccentric cam 140 is provided on the output shaft of an electric motor (not shown) mounted on the pump body 100.

The center position P1 of the eccentric cam 140 is eccentric to the shaft center P2 of the output shaft. As the output shaft rotates, the eccentric cam 140 rotates around the shaft center P2 of the output shaft.

The piston 40 is a metal-made part which has a circular section and can be slidably inserted into the reduced diameter portion 12 of the cylinder 10. One end 40a of the piston 40 projects into the enlarged diameter portion 11 (into the pump chamber 30), while the other end 40b of the piston 40 projects into the bearing hole 131 (into the cam chamber 130).

The pump chamber 30 is defined within the cylinder 10 by the outer surface of the one end 40a of the piston 40, the inner peripheral surface of the enlarged diameter portion 11 and the surface of the cover member 20.

The end face 41b of the other end 40b of the piston 40 is contacted by the cam surface 141 of the eccentric cam 140. When the output shaft is rotated, the piston 40 is pressed by the cam surface 141 and is thereby moved axially toward the one end of the cylinder 10. The amount of such axial movement of the piston 40 is defined as the stroke length S1 of the piston 40 (see Fig. 2B).

The center position P1 of the eccentric cam 140 is eccentric to the shaft center P2 of the output shaft. Thus, the stroke length S1 of the piston 40 (see Fig. 2B) is double the eccentric amount, that is, double the distance from the center portion P1 to the shaft center P2.

In this embodiment, as shown in Fig. 2B, the length of the above-mentioned seal section L1 is set larger than the stroke length S1 of the piston 40. That is, the stroke length S1 is kept within the range of the seal section L1.

The coil spring 60 is an elastic member produced by winding a wire rod 60a having a circular section. The coil spring 60 includes an effective winding portion 61 expandable and compressible in the axial direction of the piston 40, a cover side seat winding portion 62 contactable with the surface of the cover member 20, and a piston side seat winding portion 63 contactable with the end face 41 a of the piston 40.

The coil spring 60 is disposed within the enlarged diameter portion 11 in the compressed state to press the piston 40 toward the eccentric cam 140. When the eccentric cam 140 moves to press the piston 40 and thereafter is drawn away from the piston 40, the coil spring 60 urges the piston 40 toward the cam surface 141. That is, the coil spring 60 keeps the piston 40 to be in contact with the cam surface 141.

The cylinder 10 includes in its inner peripheral surface the suction port 110 and discharge port 120 respectively opened in the pump chamber 30.

The suction port 110 communicates with a suction fluid passage 110A formed within the pump body 100, whereby the brake fluid is sucked from the suction fluid passage 110A through the suction port 110 into the pump chamber 30.

The discharge port 120 communicates with a discharge fluid passage 120A within the pump body 100, whereby the brake fluid within the pump chamber 30 is discharged through the discharge port 120 to the discharge fluid passage 120A.

The suction fluid passage 110A includes a suction valve 70 serving as a check valve allowing only the flow of the brake fluid into the pump chamber 30.

The suction valve 70 includes a cylindrical member 74 having a suction hole 75 penetrating therethrough, a suction valve member 71 for sealing the pump chamber 30 side opening of the suction hole 75, a retainer 72 for accommodating the suction valve member 71, and a spring member 73 accommodated within the retainer 72.

The cylindrical member 74 is a cylindrical metal-made part and is fitted with the inner surface of the suction fluid passage 110A. The pump chamber 30 side opening edge portion of the suction hole 75 formed in the center of the cylindrical member 74 includes a valve seat the diameter of which increases in a funnel-like shape.

The suction valve member 71 is a spherical-shaped metal part, and seals the opening of the suction hole 75 when it is contacted therewith.

The retainer 72 is a bottomed cylindrical cover member, while its opening is fitted with the outer surface of the pump chamber 30 side end portion of the cylindrical member 74. The retainer 72 accommodates the suction valve member therein. The retainer 72 also includes multiple communication holes, thereby allowing the inside of the retainer 72 and the inside of the suction fluid passage 110A to communicate with each other.

The spring member 73 is a coil spring which, while compressed, is interposed between the bottom surface of the retainer 72 and the suction valve member 71 to thereby press the suction valve member 71 toward the suction hole 75.

In the suction valve 70, when a value obtained by subtracting the brake fluid pressure of the upstream side (pump chamber 30 side) of the suction fluid passage 110A from the brake fluid pressure of the downstream side thereof is equal to or larger than the valve opening pressure (the energization force of the spring member 73), the suction valve member 71 is detached from the suction hole 75 and is thereby opened.

The discharge fluid passage 120A includes a discharge valve 80 serving as a check valve allowing only the outflow of the brake fluid from within the pump chamber 30.

The discharge valve 80 includes a cylindrical member 84 having a discharge hole 85 penetrating therethrough, a discharge valve member 81 for sealing the pump chamber 30 side opening of the discharge hole 85, a retainer 82 for accommodating the discharge valve member 81, and a spring member 83 accommodated within the retainer 82.

This discharge valve 80 is a check valve having the same structure as the above-mentioned suction valve 70. When a value obtained by subtracting the brake fluid pressure of the downstream side of the discharge fluid passage 120A from the brake fluid pressure of the upstream side (pump chamber 30 side) thereof is equal to or larger than the valve opening pressure (the energization force of the spring member 83), the discharge valve member 81 is detached from the discharge hole 85 and is thereby opened.

Next, the operation of the piston pump 1 according to the embodiment will be described.

As shown in Fig. 1, while the pump chamber 30 is filled with the brake fluid, when the piston 40 is pressed by the cam surface 141 of the rotating eccentric cam 140 and is thereby forwardly moved toward the one end side, the capacity of the pump chamber 30 decreases, and the fluid pressure of the brake fluid within the pump chamber 30 is caused to increase. As a result, the discharge valve 80 is opened, and thus, the brake fluid within the pump chamber 30 is discharged through the discharge port 120 to the discharge fluid passage 120A.

After the piston 40 fully moves toward the one end side and thus the capacity of the pump chamber 30 becomes smallest, eventually, the cam surface 141 shifts in a direction to be drawn away from the piston 40. On this occasion, due to pressure force applied from the coil spring 60, the piston 40 is reversely moved in the axial direction toward the cam surface 141 to thereby increase the capacity of the pump chamber 30.

As the capacity of the pump chamber 30 increases, the pressure within the pump chamber 30 becomes negative to open the suction valve 70, and the brake fluid is sucked from the suction fluid passage 110A through the suction port 110 into the pump chamber 30.

After the piston 40 fully moves back toward the other end side and the capacity of the pump chamber 30 becomes largest, eventually, the piston 40 is pressed by the cam surface 141 and is again forwardly moved, whereby, similarly to the case of the above-mentioned forward operation, the brake fluid within the pump chamber 30 is pressed by the piston 40 and is then discharged to the discharge fluid passage 120A.

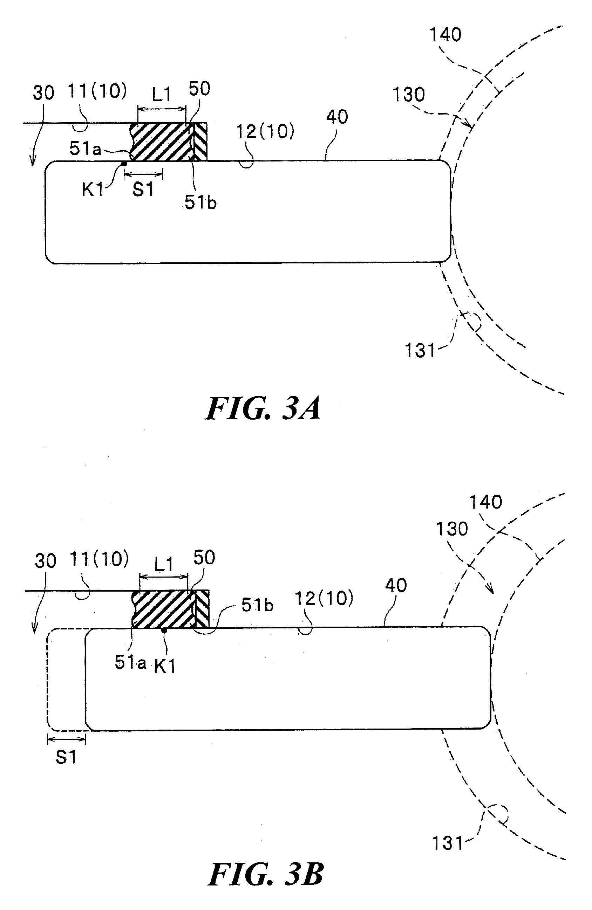

In the above-mentioned piston pump 1, the piston 40 may have a scratch K1 on its outer peripheral surface, as shown in Fig. 3A. According to an example shown in Fig. 3A, it is assumed that the scratch K1 is situated laterally of the seal member 50 in a state where the piston 40 forwardly moves toward the one end side.

When the piston 40 moves from the forwardly moved state (Fig. 3A) to the reversely moved state (Fig. 3B) in which the piston 40 fully moves toward the other end side, the scratch K1 moves toward the seal member 50 an amount corresponding to the stroke length S1 of the piston 40.

Here, since the seal section L1 of the seal member 50 is set larger than the stroke length S1 of the piston 40, although the scratch K1 goes beyond the shallow side lip portion 51a (the sliding contact surface 53 on the one end side) of the seal member 50, it still stays within the seal section L1 in the sliding direction. That is, the scratch K1 does not go beyond the deep side lip portion 51b (the sliding contact surface on the other end side) in the sliding direction such that the scratch K1 does not reach the reduced diameter portion 12 of the cylinder 10.

Thus, the brake fluid can be prevented from leaking to the reduced diameter portion 12 beyond the seal member 50 through the scratch K1.

Alternatively, assuming that the scratch K1 exists within the seal section L1 of the seal member 50 in the forwardly moved state (Fig. 3A) of the piston 40, when the piston 40 fully moves back toward the other end side, the scratch K1 could reach the reduced diameter portion 12 beyond the deep side lip portion 51b. However, since the seal section L1 is sealed by the shallow side lip portion 51a, even when the scratch K1 moves between the inside of the seal section L1 and the reduced diameter portion 12 side due to the reciprocating operation of the piston 40, the brake fluid is prevented from leaking out to the reduced diameter portion 12 side.

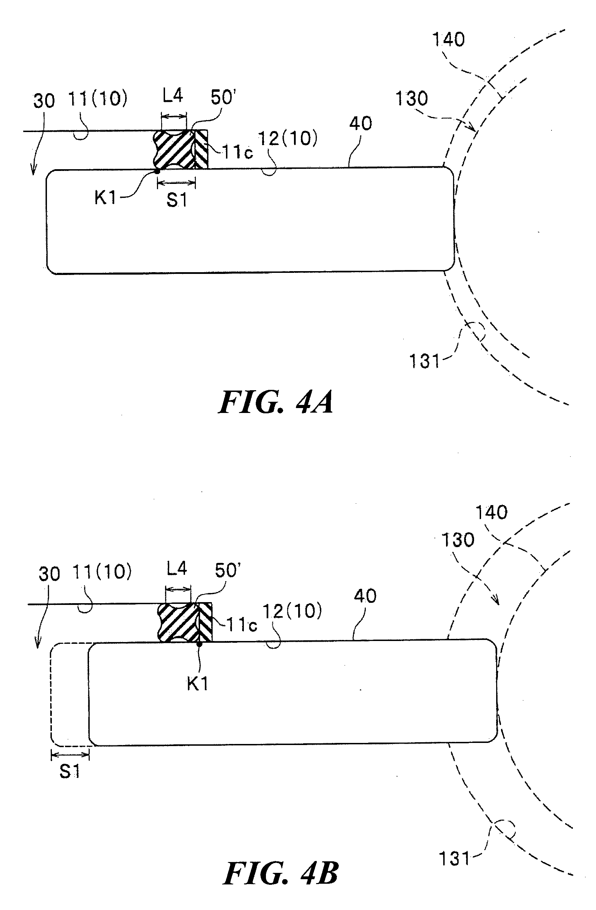

As a comparison example as shown in Fig. 4A will be described. In the comparison example, the seal section L4 of a seal member 50' is smaller than the stroke length S1 of the piston 40.

When the piston 40 moves from a state of Fig. 4A where the piston 40 fully moves toward the one side end to a state of Fig. 4B where the piston 40 fully moves back toward the other end side, the scratch K1 moves toward the seal member 50' an amount corresponding to the stroke length S1 of the piston 40.

Here, since the length of the seal section L4 of the seal member 50' is smaller than the stroke length S1 of the piston 40, as shown in Fig. 4B, the scratch K1 could reach the reduced diameter portion 12 beyond the seal member 50'. This may cause the flow-out of the brake fluid to the reduced diameter portion 12 side.

On the other hand, according to the piston pump 1 of this embodiment, since the length of the seal section L1 of the seal member 50 is set larger than the stroke length S1 of the piston 40, the brake fluid can be prevented from leaking out to the reduced diameter portion 12 side beyond the seal member 50 through the scratch K1.

According to the piston pump 1 of this embodiment, since the length of the seal section L1 is set larger than the stroke length S1 of the piston 40, even when a scratch (K1), a dent and the like exists on the piston 40 near the seal member 50, such scratch/dent can be prevented from moving to the cam chamber 130 side beyond the seal section L1. Thus, the brake fluid can be prevented from invading from the pump chamber 30 into the cam chamber 130 through the scratch/dent.

Since the seal member 50 includes the two sliding contact surfaces 53 and 53 (lip portions 51 a and 51b) on the one end side and on the other end side in the sliding direction of the piston 40, even when the scratch/dent exists, it can move beyond only one of the lip portions 51a and 51b, whereby the brake fluid can be effectively prevented from invading into the cam chamber 130.

Since the length L2 between the one surface-pressure-peak portion 52a to the other surface-pressure-peak portion 52b is larger than the stroke length S1, even a scratch, a dent and the like is formed on the piston 40 at the pump chamber 30 side, it can be prevented from moving to the cam chamber 130 beyond the surface-pressure-peak portion 52b, thereby preventing the brake fluid from invading from the pump chamber 30 to the cam chamber 130 through the scratch/dent.

When the seal member 50 is fitted with the outer surface of the piston 40, the cylinder diameter direction thickness D1 thereof is smaller than the length L1 between the surface-pressure-peak portions 52a and 52b. Therefore, the thickness of the seal member 50 can be reduced while providing a longer seal section L1 than the stroke length S1 of the piston 40. Thus, the size of the piston pump 1 in the cylinder diameter direction can be reduced.

Although the embodiment has been exemplified, the invention is not limited thereto, and can be variously modified without departing from the scope of the invention.

For example, in the above embodiment, the piston 40 is slidable with respect to the seal member 50. However, this is not limitative. A recessed portion or the like may also be formed in the piston 40, the seal member 50 may be accommodated in such recessed portion or the like, and the seal member 50 may slide with respect to the enlarged diameter portion 11 (cylinder 10).

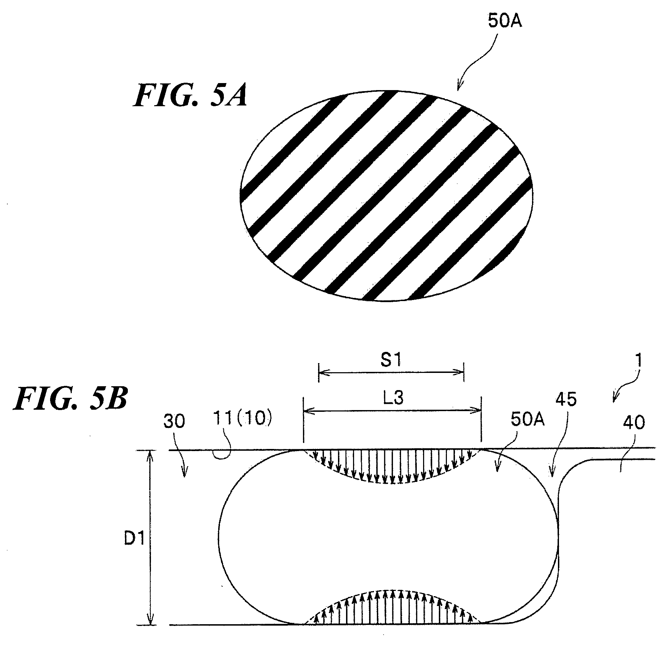

As shown in Fig. 5A, instead of the above-mentioned seal member 50, a seal member 50A such as an O ring having an oval-shaped section can be used. In Fig. 5A, a step portion 45 (or a recessed portion) is formed in the piston 40, the seal member 50A is disposed in the step portion 45, and the seal member 50A is slidable with respect to the enlarged diameter portion 11 (cylinder 10).

As the magnitude of the surface pressure is shown by arrows shown in Fig. 5B, there exists only one sliding contact surface (a section where surface pressure occurs). Thus, a seal section L3 is defined as a section ranging from one end (left end) to the other end (right end) of the sliding contact surface. Also in this case, the length of the seal section L3 is set larger than the stroke length S1 of the piston 40. Also, when the seal member 50A is fitted with the outer shape of the piston 40, the cylinder diameter direction thickness D1 thereof is smaller than the length of the seal section L3.

According to this structure, since the length of the seal section L3 is larger than the stroke length S1 of the piston 40, even in the case that the piston 40 disposed on the pump chamber 30 side has any scratch, dent and the like (which are not shown), such scratch/dent can be prevented from moving to the cam chamber 130 (not shown) beyond the seal member. This can prevent the brake fluid from invading from the pump chamber 30 through the scratch/dent into the cam chamber 130 (not shown).

Also, according to this simple structure using the seal member 50A such as an O ring having an oval-shaped section, the thickness of the seal member 50A can be reduced while providing the seal section L3 longer than the stroke length S1 of the piston 40. Thus, the size of the piston pump 1 in the cylinder diameter direction can be reduced.

Since the seal section L3 is defined as a section ranging from the one end to the other end of the sliding contact surface, whole area ranging from the one end to the other end of the sliding contact surface can be sealed, thereby effectively preventing the brake fluid from invading into the cam chamber 130.

Although the above embodiments respectively use the single seal member 50 or 50A, multiple seal members may also be arranged in the sliding direction of the piston 40 and thus a seal section may extend over the multiple seal members.

## Claims

1. A piston pump (1), comprising:
a cylinder (10) formed in a pump body (100);
a piston (40) reciprocatable within the cylinder (10); and
a seal member (50, 50A) interposed between the cylinder (10) and the piston (40) for sealing fluid tight between a pump chamber (30) and a cam chamber (130), the pump chamber (30) being formed on one end (40a) side of the piston (40) in a sliding direction thereof, the cam chamber (130) being formed on the other end (40b) side of the piston (40) in the sliding direction,
wherein the seal member (50, 50A) includes
a sliding contact surface (53) closely contactable with the cylinder (10) or the piston (40) and
a seal section (L1, L3) defined between the piston (40) and the seal member (50) so as to be sealed by the sliding contact surface (53) in the sliding direction of the piston (40),
**characterized in that** the length of the seal section (L1, L3) is larger than the stroke length (S1) of the piston (40).

2. The piston pump (1) of Claim 1,
wherein the seal member (50) includes two sliding contact surfaces (53) arranged in the sliding direction of the piston (40), and
wherein the seal section (L1) ranges from the one-end-side end of the sliding contact surface (53) to the other-end-side end of the sliding contact surface (53).

3. The piston pump (1) of Claim 2,
wherein the two sliding contact surfaces (53) respectively include a surface-pressure-peak portion (52) having the highest surface pressure, and
wherein a length (L2) between the surface-pressure-peak portions is larger than the stroke length (S1).

4. The piston pump (1) of Claim 3,
wherein a cylinder diameter direction thickness (D1) of the seal member (50) is smaller than the length (L2) between the surface-pressure-peak portions.

5. The piston pump (1) of Claim 1,
wherein the seal member (50A) has an oval-shaped section and a cylinder diameter direction thickness (D1) of the seal member (50A) is smaller than the length of the seal section (L3).

6. The piston pump (1) of Claim 5,
wherein the seal section (L3) ranges from one end to the other end of the sliding contact surface (53).

7. The piston pump (1) of Claim 1,
wherein the seal member (50) includes two sliding contact surfaces (53)
wherein the sliding contact surfaces (53) includes a lip portion (51a) extending toward the pump chamber (30) side and a lip portion (51b) extending toward the cam chamber (130) side, respectively, and
wherein the seal section (L1) extends over the two lip portions (51a, 51b).

## Patentansprüche

1. Kolbenpumpe (1), aufweisend:
einen Zylinder (10), der in einem Pumpenkörper (100) ausgebildet ist,
einen Kolben (40), der im Zylinder (10) hin und her bewegbar ist,
ein Dichtungselement (50, 50A), das zwischen dem Zylinder (10) und dem Kolben (40) zum flüssigkeitsdichten Abdichten zwischen einer Pumpenkammer (30) und einer Mitnehmerkammer (130) eingefügt ist, wobei die Pumpenkammer (30) an einer Seite eines Endes (40a) des Kolbens (40) in einer Gleitrichtung hiervon ausgebildet ist, wobei die Mitnehmerkammer (130) an einer Seite des anderen Endes (40b) des Kolbens (40) in der Gleitrichtung ausgebildet ist,
wobei das Dichtungselement (50, 50A) aufweist:
eine Gleitkontaktfläche (53), die mit dem Zylinder (10) oder dem Kolben (40) eng kontaktierbar ist, und
eine Dichtungssektion (L1, L3), die zwischen dem Kolben (40) und dem Dichtungselement (50) definiert ist, um durch die Gleitkontaktfläche (53) in der Gleitrichtung des Kolbens (40) abgedichtet zu sein,
**dadurch gekennzeichnet, dass**
die Länge der Dichtungssektion (L1, L3) größer ist als die Hublänge (S1) des Kolbens (40).

2. Kolbenpumpe (1) gemäß Anspruch 1,
bei der das Dichtungselement (50) zwei Gleitkontaktflächen (53) aufweist, die in der Gleitrichtung des Kolbens (40) angeordnet sind, und bei der die Dichtungssektion (L1) von dem Ende der einen Endseite der Gleitkontaktfläche (53) zum anderen Ende der anderen Endseite der Gleitkontaktfläche (53) reicht.

3. Kolbenpumpe (1) gemäß Anspruch 2,
bei der die zwei Gleitkontaktflächen (53) entsprechend einen Flächen-Druck-Spitzen-Abschnitt (52) aufweisen, der den höchsten Flächendruck aufweist, und
bei der eine Länge (L2) zwischen den Flächen-Druck-Spitzen-Abschnitten größer ist als die Hublänge (S1).

4. Kolbenpumpe (1) gemäß Anspruch 3,
bei der eine Zylinderdurchmesserrichtungsdicke (D1) des Dichtungselements (50) kleiner ist als die Länge (L2) zwischen den Flächen-Druck-Spitzen-Abschnitten.

5. Kolbenpumpe (1) gemäß Anspruch 1,
bei der das Dichtungselement (50A) eine ovalförmige Sektion aufweist und eine Zylinderdurchmesserrichtungsdicke (D1) des Dichtungselements (50A) kleiner ist als die Länge der Dichtungssektion (L3).

6. Kolbenpumpe (1) gemäß Anspruch 5,
bei der die Dichtungssektion (L3) von einem Ende zum anderen Ende der Gleitkontaktfläche (53) reicht.

7. Kolbenpumpe (1) gemäß Anspruch 1,
bei der das Dichtungselement (50) zwei Gleitkontaktflächen (53) aufweist,
bei der die Gleitkontaktflächen (53) entsprechend einen Lippenabschnitt (51a), der sich zur Seite der Pumpenkammer (30) erstreckt, und einen Lippenabschnitt (51b), der sich zu Seite der Mitnehmerkammer (130) erstreckt, aufweisen, und
bei der sich die Dichtungssektion (L1) über die zwei Lippenabschnitte (51a, 51b) erstrecken.

## Revendications

1. Pompe à piston (1), comprenant :
un cylindre (10) formé dans un corps de pompe (100) ;
un piston (40) pouvant aller et venir dans le cylindre (10) ; et
un élément formant joint (50, 50A) interposé entre le cylindre (10) et le piston (40) pour une étanchéité au fluide entre une chambre de pompe (30) et une chambre de came (130), la chambre de pompe (30) étant formée sur un côté première extrémité (40a) du piston (40) dans une direction de coulissement de ce dernier, la chambre de came (130) étant formée sur le côté autre extrémité (40b) du piston (40) dans la direction de coulissement,
dans lequel l'élément formant joint (50, 50A) inclut
une surface de contact coulissante (53) pouvant être mise en contact étroit avec le cylindre (10) ou le piston (40), et
une section de joint (L1, L3) définie entre le piston (40) et l'élément formant joint (50) afin d'être scellée par la surface de contact coulissante (53) dans la direction de coulissement du piston (40),
**caractérisée en ce que** la longueur de la section de joint (L1, L3) est plus grande que la longueur de course (S1) du piston (40).

2. Pompe à piston (1) selon la revendication 1,
dans laquelle l'élément formant joint (50) inclut deux surfaces de contact coulissantes (53) agencées dans la direction de coulissement du piston (40), et
dans laquelle la section de joint (L1) s'étend depuis l'extrémité côté première extrémité de la surface de contact coulissante (53) jusqu'à l'extrémité côté autre extrémité de la surface de contact coulissante (53).

3. Pompe à piston (1) selon la revendication 2,
dans laquelle les deux surfaces de contact coulissantes (53) incluent respectivement une partie de pic de pression superficielle (52) ayant la pression superficielle la plus élevée, et
dans laquelle une longueur (L2) entre les parties de pic de pression superficielle est plus grande que la longueur de course (S1).

4. Pompe à piston (1) selon la revendication 3,
dans laquelle une épaisseur de direction de diamètre de cylindre (D1) de l'élément formant joint (50) est plus petite que la longueur (L2) entre les parties de pic de pression superficielle.

5. Pompe à piston (1) selon la revendication 1,
dans laquelle l'élément formant joint (50A) a une section de forme ovale et une épaisseur de direction de diamètre de cylindre (D1) de l'élément formant joint (50A) est plus petite que la longueur de la section de joint (L3).

6. Pompe à piston (1) selon la revendication 5,
dans laquelle la section de joint (L3) s'étend depuis une première extrémité jusqu'à l'autre extrémité de la surface de contact coulissante (53).

7. Pompe à piston (1) selon la revendication 1,
dans laquelle l'élément formant joint (50) inclut deux surfaces de contact coulissantes (53)
dans laquelle les surfaces de contact coulissantes (53) incluent respectivement une partie de lèvre (51a) s'étendant vers le côté de la chambre de pompe (30) et une partie de lèvre (51b) s'étendant vers le côté de la chambre de came (130), et
dans laquelle la section de joint (L1) s'étend sur les deux parties de lèvre (51a, 51b).
